# EUROPEAN PATENT APPLICATION

(11) **EP 3 838 454 A1**
(43) Date of publication of application: **23.06.2021**
(21) Application number: 20215311.0
(22) Date of filing: 18.12.2020
(51) Int. Cl.: B22F 10/38, B22F 12/90, B23K 26/342, B33Y 30/00, B33Y 50/02, B22F 10/25, B22F 10/28

(54) **SYSTEM AND METHOD FOR DETECTING AND REGULATING MICROSTRUCTURE ONLINE WITH ELECTROMAGNETIC ASSISTANCE**

(30) Priority: 19.12.2019 CN 201911314260
(71) Applicant: Huazhong University of Science and Technology, Wuhan Hubei 430074 (CN)
(72) Inventor: ZHANG, Hai ou, Wuhan, Hubei 430074 (CN); ZHAO, Xushan, Wuhan, Hubei 430074 (CN); WANG, Guilan, Wuhan, Hubei 430074 (CN); LI, Runsheng, Wuhan, Hubei 430074 (CN); CHEN, Yao, Wuhan, Hubei 430074 (CN)
(74) Representative: ABYOO

(57) **Abstract**

The invention belongs to the field of metal additive manufacturing, and specifically concerns a system and a method for detecting and regulating a microstructure online with an electromagnetic assistance. The system comprises a forming device (4), a detecting device (1), a regulating device and a substrate (10). The detecting device is connected with the regulating device, and the regulating device comprises an electromagnetic shock regulating unit (3) and/or an electromagnetic stirring regulating unit (5). In operation, a workpiece may be formed layer by layer on the substrate (10) by the forming device (4), while the detecting device (1) performs a real time detection of the microstructure in a formed area and transmits a detection result to the regulating device. According to the detection result, the electromagnetic shock regulating unit (3) may be used to perform an electromagnetic shock on a newly formed fused micro area (2), and/or the electromagnetic stirring regulating unit (5) may be used to perform the electromagnetic stirring on a molten pool (6) to regulate the microstructure of the workpiece. The invention enables to control grain size and reduce defects such as pores and incomplete fusion during a forming process, and has advantages of closed loop regulation, stability, and strong pertinence.

## Description

### TECHNICAL FIELD

The invention relates to the field of metal additive manufacturing, in particular to a system and a method for detecting and regulating a microstructure online with an electromagnetic assistance.

### BACKGROUND

In recent years, metal additive manufacturing has been widely used in industries, such as military industry, automobile industry, ship industry, mould industry, electronics industry, and medical industry, depending on advantages of high flexibility, no mould, short period, not being restricted by structures and materials of parts, and so on.

However, how to effectively control a metallurgical process of melting-solidifying, under a condition of rapid heat conduction, super high temperature gradient and ultrafast cooling speed of a solid metal substrate without interface thermal resistance during a process of the metal additive manufacturing, in order to regulate a solidified structure of a formed component, eliminate defects, such as keyholes and microcracks, regulate grain growth, and finally realize an optimization of a performance of the component, which is an obstacle to the wider application of metal additive manufacturing. On the one hand, a metallurgical structure (such as grain size, grain morphology, crystal orientation, grain boundary construction and uniformity of chemical composition) and mechanical property of a final additive formed component may be directly affected by a rapid solidification of a high temperature molten pool, a behavior of metallurgical dynamic of a metal in the molten pool and its crystal nucleation and growth during a layer-by-layer accumulation. A single additive process may likely lead to coarse, uneven and anisotropic microstructure of the formed component, and an insufficient regulation of the microstructure will lead to insufficient performance and unreliability of the formed component. On the other hand, an uncontrollable deformation and a larger residual stress will be caused due to a sudden cooling or heating of the formed component and its high temperature gradient. Excessive residual stress can reduce mechanical properties of the formed component and even generate microcracks. Complicated thermal cycle may lead to complex residual stress distribution, which may lead to deformation and cracking of the formed component. These problems reduce mechanical properties and reliability of the formed component in metal additive manufacturing, thereby restricting the promotion and application of the technology of metal additive manufacturing.

At present, the microstructure and the property are mainly regulated by a method of optimizing process parameters and a method of introducing forced processing in the field of metal additive manufacturing. A conventional optimization of process parameters requires a large number of process tests and has a certain limitation, which can no longer meet requirements of eliminating defects and improving qualities and performances. The forced processing has a certain effect on reducing the residual stress and refining the grain, but it is difficult to suppress a generation of the defects and is not combined with detection means, which leads to an uncontrollable and blind structure regulation. Therefore, it is urgent to find an effective and controllable method to solve main problems in the current metal additive manufacturing, so as to obtain the metal additive formed component with fine grains and excellent performances.

### SUMMARY OF THE INVENTION

In view of above defects of the prior art or improvement requirements, the present invention provides a system and a method for detecting and regulating a microstructure online with an electromagnetic assistance. The invention intends to detect the microstructure in real time and then regulate the microstructure through electromagnetic shocks and/or electromagnetic stirrings during a forming process of a workpiece, so as to control grain size and reduce defects such as pores and incomplete fusions, in order to realize an online detection and regulation of the microstructure. The system according to the invention has advantages of closed loop regulation, stability, and strong pertinence.

In order to achieve the above effects, a system for detecting and regulating a microstructure online with an electromagnetic assistance is provided according to an aspect of the present invention. The system comprises a forming device, a detecting device, a regulating device and a substrate. The forming device, the detecting device and the regulating device are preferably located above the substrate. The detecting device is connected with the regulating device, and the regulating device comprises an electromagnetic shock regulating unit and/or an electromagnetic stirring regulating unit.

In operation, a workpiece may be formed layer by layer on the substrate through the forming device. The detecting device and the regulating device may be moved synchronously with the forming device, and the detecting device performs a real time detection of the microstructure in a formed area and transmits a detection result to the regulating device. Then, according to the detection result, the electromagnetic shock regulating unit may be used to perform an electromagnetic shock on a newly formed fused micro area and/or the electromagnetic stirring regulating unit may be used to perform an electromagnetic stirring on a molten pool, to regulate the microstructure of the workpiece and complete the detection and the regulation of the microstructure.

Optionally, the detecting device is an electromagnetic eddying detecting device.

Optionally, an axis of the detecting device is perpendicular to the substrate.

Optionally, each of the electromagnetic shock regulating unit and the electromagnetic stirring regulating unit comprises an excitation coil and a magnetic core, the excitation coil winds the magnetic core, and the magnetic core is installed on the forming device through an adjustable support.

Optionally, a water cooling channel is provided on the magnetic core.

Preferably, the forming device is an arc forming device, a laser forming device or an electron beam forming device.

According to another aspect of the present invention, a method for detecting and regulating a microstructure online with an electromagnetic assistance is provided, which is implemented by the above system, and the method comprises the following steps:
S1: a forming device forming a workpiece layer by layer on a substrate according to a predetermined forming path, a detecting device and a regulating device moving synchronously with the forming device, and the detecting device detecting a microstructure of the workpiece in a formed area in real time;
S2: under a condition that a detection result is normal, repeating S1; under a condition that an abnormal microstructure is detected, transmitting the detection result to the regulating device; the regulating device using an electromagnetic shock regulating unit to perform the electromagnetic shock on a newly formed fused micro area according to the detection result in order to produce a plastic ductile deformation of the fused micro area and/or the regulating device uses an electromagnetic stirring regulating unit to perform the electromagnetic stirring on a molten pool according to the detection result to homogenize a temperature of the molten pool and generate convection, so as to regulate the microstructure; and
S3: repeating S1 and S2 until the workpiece is formed, to realize an online detection and regulation for the microstructure during a forming process of the workpiece.

Optionally, the detecting device performs an electromagnetic eddying non destructive detection on the formed area of the workpiece, and then realizes the detection of the microstructure in the formed area according to a detected electromagnetic signal and a database with a relationship between a predetermined electromagnetic signal and the microstructure.

Optionally, the magnetic field applied to the detecting device, the magnetic field of the electromagnetic shock regulating unit and/or the magnetic field of the electromagnetic stirring regulating unit is any one or more of a continuous magnetic field, an alternating magnetic field and a pulsed magnetic field.

In general, compared with the conventional technology, the present invention presents the following technical advantages:
1. In a process of the additive manufacturing of the present invention, the microstructure in a solidified area is detected by the detecting device, which provides bases for further regulating an electromagnetic microstructure in the molten pool or in the solidified area with high temperature of the molten pool, and realizes an online closed loop detection and regulation for the microstructure of a metal component during the additive manufacturing. Compared with a traditional method for detecting-regulating parameters after additive forming or for regulating parameters of a single microstructure during a whole process of additive forming, a coordinated operation of the detecting device and the regulating device of the present invention has the advantages of closed loop regulation, stability, and strong pertinence by means of closed-loop regulation for realtime detection and realtime regulation.
2. The invention adopts a non-contacting detection to avoid effects on the forming process, and meanwhile adopts a same electromagnetic generation auxiliary system to integrate multiple functions of the electromagnetic eddying non destructive detection on the microstructure, the molten pool control with the electromagnetic assistance, and the grain refinement with the electromagnetic shock, to implement a single assistant device integrated with multiple functions with reducing a complexity of detection and control devices.
3. In the present invention, a relative position of the regulating device and a energy source may be adjusted by an adjustable clamp. The regulating device may be spatially varied according to the result of the detecting device. A direction of an externally applied magnetic field of the regulating device is any one of a vertical direction and a horizontal direction to form an auxiliary means of magnetic field with respect to forming quality monitoring, multiple controls of flow directions of the molten pool, multiple control strengths, and multiple control modes.
4. In the present invention, simple components with a single shape and a single performance may be produced, and functional components with complex shapes and complex performances also may be produced. And different components required by microstructures in different areas, such as gradient materials can also be designed in advance to regulate the microstructures in real time during the forming process to achieve the desired intention.

### BRIEF DESCRIPTION OF THE DRAWINGS

Fig. 1 schematically shows a system according to an embodiment of the present invention.
Fig. 2 is a flowchart of a method according to an embodiment of the present invention.

Throughout all the drawings, the same reference numerals are used to denote the same elements or structures, wherein: 1- a detecting device, 2-a fused micro area, 3-an electromagnetic shock regulating unit, 4-a forming device, 5-an electromagnetic stirring regulating unit, 6-a molten pool, and 7-a formed area.

### DETAILED DESCRIPTION OF THE EMBODIMENTS

For a better understanding of intentions, technical solutions and advantages of the present invention, the invention will be further described in details by reference to the accompanying drawings and embodiments. It should be understood that the specific embodiments described herein are only used to explain the present invention, not to limit the invention. In addition, the technical features involved in the various embodiments of the present invention described below can be combined with each other as long as they do not conflict with each other.

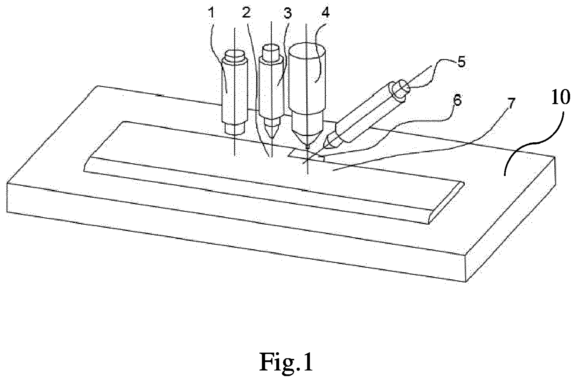

A system for detecting and regulating a microstructure online with an electromagnetic assistance is provided by an embodiment of the present invention. As shown in Fig. 1, the system comprises a forming device 4, a detecting device 1, a regulating device and a substrate 10, wherein the forming device 4, the detecting device 1 and the regulating device are preferably located above the substrate 10. Preferably, the forming device 4 is an arc forming device, a laser forming device or an electron beam forming device.

The detecting device 1 is connected with the regulating device and is located behind the forming device 4. The detecting device 1 may be moved synchronously with the forming device 4. And an axis of the detecting device 1 is preferably perpendicular to the substrate 10. Preferably, the detecting device 1 is an electromagnetic eddying detecting device, which detects the microstructures based on electromagnetic signals. The electromagnetic eddying detecting device preferably shares an electromagnetic generator with the regulating device.

The regulating device is located around the forming device 4, and comprises an electromagnetic shock regulating unit 3 and/or an electromagnetic stirring regulating unit 5, which may change a magnitude of a magnetic field, a type of the magnetic field and a distribution of the magnetic field of an electromagnetic field generator in a molten pool area by changing a magnitude and a type of an exciting current of an electromagnetic field generator or by changing a position and a tilt angle of the electromagnetic field generator relative to the forming device 4, in order to change a magnitude, a type and a direction of an external magnetic field such that a process of grain growth, a convection in the molten pool and a heat and mass transfer may be controlled through the external magnetic field.

Preferably, each of the electromagnetic shock regulating unit 3 and the electromagnetic stirring regulating unit 5 comprises an excitation coil and a magnetic core, the excitation coil winds the magnetic core, and the magnetic core is installed on the forming device 4 through an adjustable support. A relative position and a posture of the magnetic core and the molten pool may be changed by an adjustable support to adjust the distribution of the magnetic field. A water-cooling channel is preferably provided on the magnetic core.

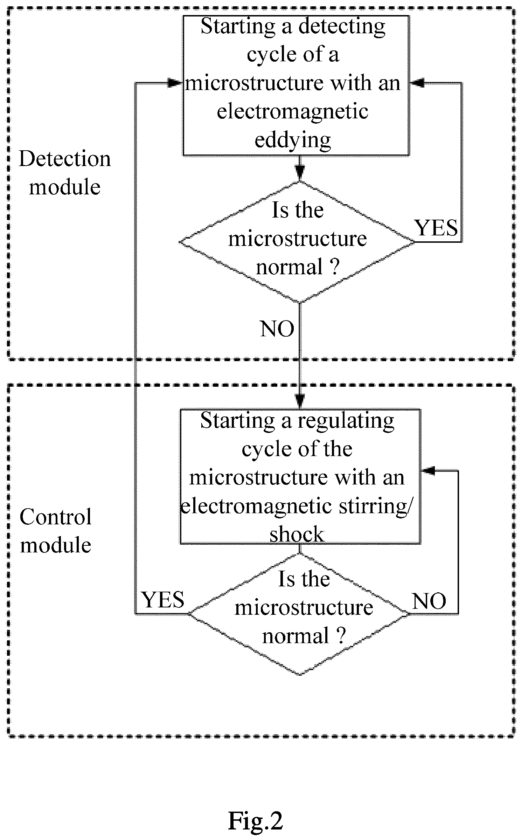

The above system is adapted to perform an online detection and regulation of a microstructure, as shown in Fig. 2, which specifically comprises following steps:
S1: A forming device 4 forms a workpiece layer by layer on a substrate 10 according to a predetermined forming path, a detecting device 1 and a regulating device move synchronously with the forming device 4. The detecting device 1 performs an electromagnetic eddying non-destructive decetion on a formed area 7 of the workpiece, and then performs a realtime detection of the microstructure in the formed area 7 according to a detected electromagnetic signal and a default relational database between a predetermined electromagnetic signal and the microstructure.
S2: Under a condition that a detection result is normal, S1 is repeated; under a condition that an abnormal microstructure is detected, the detecting device 1 transmits the detection result to the regulating device, so that the regulating device uses a electromagnetic shock regulating unit 3 to perform the electromagnetic shock on a newly formed fused micro area 2, and/or uses the electromagnetic stirring regulating unit 5 to perform the electromagnetic stirring on a molten pool 6 according to the detection result, so as to change a whole forming process from a solidification and crystallization, solid-state phase transformation of the molten pool to a recrystallization of the molten pool and the regulation of the microstructure to improve performances of the workpiece.
S3: S1 and S2 are repeated until the workpiece is formed to realize the online detection and regulation for the microstructure during the forming process of the workpiece.

The above overall detection-regulation is realtime, online and closed-loop during additive forming. Specifically, the detection-regulation performs data transmission and determination in a short time, in order to avoide excessively long regulating blind zone caused by a detection-regulation interval to affect final forming quality. As for a hysteresis of the regulating device relative to the detecting device, position parameters to be regulated may be stored, the regulation of the electromagnetic shock may be performed during forming a next layer.

Preferably, a database for forming materials needs to be established before the additive forming, and comprises a database with a relationship between the electromagnetic signal and the microstructure and a database with a relationship between the microstructure and regulating parameters of the magnetic field. More preferably, a database with microstructure - initial permeability or resistivity - electromagnetic signal may be established through finite elements micro and macro models to obtain a relationship between the electromagnetic signals (frequency over zero) and the microstructures such that the microstructure of the workpiece may be predicted according to the detected electromagnetic signal and the microstructure in a solidified formed area may be monitored in real time. The microstructure of the workpiece comprises compositions of the microstructure (grain size) and defects of the microstructure (pores / incomplete fusion). The database with the relationship between the microstructure and the regulating parameters of the magnetic field comprises a database with a relationship between the size of the grain and stirring parameters of the magnetic field in the molten pool / shock parameters of the magnetic field in the molten pool and a database with a relationship between the defects of pores / incomplete fusion and stirring parameters of the magnetic field in the molten pool / shock parameters of the magnetic field in the molten pool.

More preferably, the electromagnetic shock regulating unit 3 performs an AC electromagnetic shock on the newly formed fused micro area 2, i.e. an electromagnetic force is applied to a solidified area with a higher temperature and a higher plasticity in a rear of the molten pool through an AC electromagnetic field, to produce a plastic ductile deformation, achieve effects of grain refinement, uniform distribution, residual stress reduction, and reduction of defects such as pores and incomplete fusion. The electromagnetic stirring regulating unit 5 performs an AC electromagnetic stirring on the molten pool 6 to control a flow of the molten pool 6, i.e. on the one hand, an external magnetic field is used to apply an external electromagnetic force on a molten pool of molten liquid metal to induce forced convection in the molten pool, thereby stirring the molten pool and refining the grains, changing the forming structure, and suppressing metallurgical defects such as pores, segregation, inclusions; on the other hand, flow of the molten pool may accelerate a homogenization of a temperature of the molten pool, slow down a superheat of a central liquid pool, slow down a temperature gradient near a solid-liquid interface, increase a supercooling in a two-phase region, and provide conditions for an endogenous nucleation, thereby increasing a nucleation rate and refining the grains.

Preferably, the magnetic field applied to the detecting device 1, the magnetic field of the electromagnetic shock regulating unit 3 and/or the magnetic field of the electromagnetic stirring regulating unit 5 is any one or more of of a continuous magnetic field, an alternating magnetic field and a pulsed magnetic field or a comprehensive magnetic field mixed with several magnetic fields. A forming mode of the forming device 4 includes, but is not limited to, laser, electron beam or electric arc of base materials such as metal powder/wire and composite additive manufacturing forming thereof.

Those skilled in the art may easily understand that the above descriptions are only preferred embodiments of the present invention and are not intended to limit the invention. Any modification, equivalent replacement and improvement made within the spirit and principle of the present invention shall be included in the claimed scope of the invention.

## Claims

1. A system for detecting and regulating a microstructure online with an electromagnetic assistance, wherein the system comprises a forming device (4), a detecting device (1), a regulating device and a substrate (10); wherein, the forming device (4), the detecting device (1) and the regulating device are located above the substrate (10); the detecting device (1) is connected with the regulating device, and the regulating device comprises an electromagnetic shock regulating unit (3) and/or an electromagnetic stirring regulating unit (5);
in operation, a workpiece may be formed layer by layer on the substrate (10) through the forming device (4); the detecting device (1) and the regulating device may be moved synchronously with the forming device (4); the detecting device (1) performs a real time detection for the microstructure in a formed area, and transmits a detection result to the regulating device; and then according to the detection result, the electromagnetic shock regulating unit (3) may be used to perform the electromagnetic shock on a newly formed fused micro area (2), and/or the electromagnetic stirring regulating unit (5) may be used to perform the electromagnetic stirring on a molten pool (6), to regulate the microstructure of the workpiece and complete the detection and the regulation for the microstructure.

2. The system for detecting and regulating the microstructure online with the electromagnetic assistance according to claim 1, wherein the detecting device (1) is an electromagnetic eddying detecting device.

3. The system for detecting and regulating the microstructure online with the electromagnetic assistance according to claim 1, wherein an axis of the detecting device (1) is perpendicular to the substrate (10).

4. The system for detecting and regulating the microstructure online with the electromagnetic assistance according to claim 1, wherein each of the electromagnetic shock regulating unit (3) and the electromagnetic stirring regulating unit (5) comprises an excitation coil and a magnetic core; the excitation coil winds the magnetic core; and the magnetic core is installed on the forming device (4) through an adjustable support.

5. The system for detecting and regulating the microstructure online with the electromagnetic assistance according to claim 4, wherein a water cooling channel is provided on the magnetic core.

6. The system for detecting and regulating the microstructure online with the electromagnetic assistance according to any one of claims 1-5, wherein the forming device (4) is an arc forming device, a laser forming device or an electron beam forming device.

7. A method for detecting and regulating a microstructure online with an electromagnetic assistance implemented by the system of any one of claims 1-6, comprising:
S1: a forming device (4) forming a workpiece layer by layer on a substrate (10) according to a predetermined forming path, a detecting device (1) and a regulating device moving synchronously with the forming device (4), and the detecting device (1) detecting a microstructure of the workpiece in a formed area (7) in real time;
S2: under a condition that a detection result is normal, repeating S1; under a condition that an abnormal microstructure is detected, transmitting the detection result to the regulating device, the regulating device using an electromagnetic shock regulating unit (3) to perform the electromagnetic shock on a newly formed fused micro area (2) according to the detection result, in order to produce a plastic ductile deformation of the fused micro area (2); and/or the regulating device using an electromagnetic stirring regulating unit (5) to perform the electromagnetic stirring on a molten pool (6) according to the detection result to homogenize a temperature of the molten pool (6) and generate convection, so as to regulate the microstructure; and
S3: repeating S1 and S2 until the workpiece is formed, to realize an online detection and regulation for the microstructure during a forming process of the workpiece.

8. The method for detecting and regulating the microstructure online with the electromagnetic assistance according to claim 7, wherein the detecting device (1) performs an electromagnetic eddying non-destructive detection on the formed area (7) of the workpiece, and then realizes the detection of the microstructure in the formed area (7) according to a detected electromagnetic signal and a database with a relationship between a predetermined electromagnetic signal and the microstructure.

9. The method for detecting and regulating the microstructure online with the electromagnetic assistance according to claim 8, wherein the magnetic field applied to the detecting device (1), the magnetic field of the electromagnetic shock regulating unit (3) and/or the magnetic field of the electromagnetic stirring regulating unit (5) is any one or more of a continuous magnetic field, an alternating magnetic field and a pulsed magnetic field.
